# EUROPÄISCHE PATENTSCHRIFT

(11) **EP 0 715 919 B1**
(45) Veröffentlichungstag und Bekanntmachung des Hinweises auf die Patenterteilung: **10.11.1999**
(21) Anmeldenummer: 95119126.1
(22) Anmeldetag: 05.12.1995
(51) Int. Cl.: B23D 45/26, B23D 61/04

(54) **Verfahren zum Sägen von Werkstückkörpern aus Stahl und Sägeblatt zur Verwendung in einem solchen Verfahren**
Method and saw blade for sawing steel workpieces
Procédé et lame de scie pour le sciage des pièces en acier

(30) Priorität: 05.12.1994 DE 4443044
(43) Veröffentlichungstag der Anmeldung: 12.06.1996
(73) Patentinhaber: KAMPMANN GmbH, 59457 Werl (DE)
(72) Erfinder: Koll, Wolfgang, D-59071 Hamm/Westf. (DE)
(74) Vertreter: Cohausz & Florack

(56) Entgegenhaltungen:
- EP-A- 0 286 797
- DE-A- 4 302 645
- DE-U- 8 901 651
- DE-U- 9 306 418
- DE-U- 9 307 394
- DE-U- 9 400 444
- FR-A- 2 519 896
- TZ FÜR METALLBEARBEITUNG, Bd. 81, Nr. 9, 1987, LEINFELDEN-ECHTERDINGEN (DE), Seiten 53-58, XP000566071 K. HENNING ET AL: "Kreissägen metallischer Werkstoffe" Die Steigerung der Leistungsfähigkeit moderner Sägeblätter - Teil 1
- PATENT ABSTRACTS OF JAPAN vol. 6, no. 240 (M-174), 27.November 1982 & JP-A-57 138522 (SUMITOMO DENKI KOGYO KK), 26.August 1982,
- WERKSTATT UND BETRIEB, Bd. 120, Nr. 11, 1987, MUNCHEN DE, Seiten ZM227-ZM231, XP002000108 K. HENNING ET AL: "Hartmetall-Kreissägen - Ein Verfahren mit technischen und wirtschaftlichen Vorteilen"
- PATENT ABSTRACTS OF JAPAN vol. 17, no. 172 (M-1392), 2.April 1993 & JP-A-04 331019 (SUMITOMO METAL IND LTD), 18.November 1992,
- W. BEITZ ET AL (HRSG): "DUBBEL Taschenbuch für den Maschinenbau" 1981 , SPRINGER-VERLAG , BERLIN HEIDELBERG NEW YORK XP002000109 Seite 1032 - Seite 1033
- DATABASE WPI Week 7909 Derwent Publications Ltd., London, GB; AN 79-16730B XP002000110 & JP-A-54 008 112 (HITACHI KK) , 22.Januar 1979
- SOVIET INVENTIONS ILLUSTRATED Week 8838 2.November 1988 Derwent Publications Ltd., London, GB; Page P54, AN 88-269 XP002000111 & SU-A-1 379 019 (LENGD MECH INST) , 7.März 1988

## Beschreibung

Die Erfindung betrifft ein Verfahren zum Sägen von Stahlwerkstücken, bei dem das Werkstück mittels eines Sägeblattes einem Trennvorgang mit einer vorgebbaren Schnittgeschwindigkeit unterworfen wird, wobei das Sägeblatt Schneideinsätze mit einer Oberflächenhärte von mindestens 1200 HV 30 aufweist, sowie die Verwendung eines Sägeblattes für ein solches Verfahren.

Ein Verfahren der eingangs genannten Art ist aus der Zeitschrift tz für Metallbearbeitung 81. Jahrgang 1987, Heft 9/87, Seite 53 ff bekannt. Die Bearbeitung erfolgt mittels Kreissägeblättern mit Hartmetallschneideinsätzen. Die Schneidstoffeigenschaften der Hartmetalleinsätze sind so ausgelegt, daß eine Härte HV=1500 typisch ist. Die Schnittgeschwindigkeiten für die Stahlzerspanung, die bei einem solchen bekannten Verfahren angewendet werden, liegen zwischen 80 und 180 m/min. Aus der deutschen Patentschrift 3307170 ist ein Sägeblatt mit Hartmetallschneideinsätzen bekannt, welches für übliche Sägeaufgaben, d.h. bei den oben erwähnten Schnittgeschwindigkeiten, eingesetzt werden kann.

Beim "sog. Friktionssägen" von Stahl werden zum Trennen von Rohren, Profilen, Blöcken oder Rundmaterial üblicherweise Sägeblätter eingesetzt, die an ihrem Stammkörper ausgebildete Schneidzähne aufweisen, wobei das Stammblatt und die Schneidzähne aus dem gleichen Material bestehen und eine stoffliche Einheit bilden, d.h. es handelt sich bei dieser Art Sägeblatt herkömmlicherweise um ein ein-komponentiges Werkzeug mit einer Härte von lediglich ca. 50 HRC. Auch bekannt sind für diesen Anwendungsfall sogenannte "kordierte" Sägeblätter, deren Ausgestaltung diegleichen o.g. Merkmale aufweist. Sägeblätter dieser Art werden zum Trennen eingesetzt sowohl auf stationären Sägeanlagen als auch auf mitlaufenden Sägen und rotierenden Sägen. Man unterscheidet dabei Warmkreissägeblätter, die bei Stahl mit einer Werkstücktemperatur von über 750° C eingesetzt werden, von Trennkreissägeblättern, die bei niedrigeren Materialtemperaturen, insbesondere bei kaltem Material Verwendung finden. Sowohl das Warm- als auch das Trennsägen erfolgt bei extrem hohen Drehzahlen und Vorschubgeschwindigkeiten. Übliche Vorschubgeschwindigkeiten sind 3000-15000 mm./min., wobei Schnittgeschwindigkeiten am Zahn von 4800-7200 m/Min. entstehen.

Wegen der hohen Trenngeschwindigkeit verbunden mit entsprechenden Fliehkräften war bislang der Einsatz von schneidstoffbestückten Kreissägeblättern beim Friktionssägen nicht realisiert. Zum einen tritt bei bekannten Vorrichtungen (z.B. "Dubbel, Taschenbuch für den Maschinenbau, 14. Auflage, Springer Verlag 1981, Seite 1032-1033) eine Abstumpfung der Schneiden auf, die zu Qualitätseinschränkungen, insbesondere auch durch Gratbildungen führt. Zum anderen entsteht durch die hohe Trenngeschwindigkeit eine Lärmentwicklung mit einem Schalldruckpegel von bis zu 130 db(A).

Davon ausgehend liegt der Erfindung die Aufgabe zugrunde, ein Verfahren der eingangs genannten Art dahingehend zu verbessern, daß die Nachteile des Standes der Technik vermieden werden.

Diese Aufgabe wird erfindungsgemäß bei einem Verfahren der eingangs genannten Art dadurch gelöst, daß zum Friktionssägen, insbesondere Warmsägen oder Trennsägen das Sägeblatt mit einer Schnittgeschwindigkeit von mindestens 7200 m/Min. angetrieben wird. Wesentlicher Inhalt der Erfindung ist auch die Verwendung eines Sägeblattes zum Sägen von Werkstückkörpern aus Stahl in einem Verfahren nach Anspruch 1, bestehend aus einem Stammkörper mit in seinem Umfangsbereich ausgebildeten Schneidzahnbereichen, in denen Plattensitze für in Sägerichtung wirkende Schneideeinsätze vorgesehen sind, die fliehkraftgesichert mit dem Stammkörper verbunden sind, wobei die Schneideeinsätze in ihrem abtragsaktiven Bereich eine Oberflächenhärte von mindestens 1200 HV 30 aufweisen.

Die Erfindung zeichnet sich dadurch aus, daß durch die Bestückung des Sägeblattes mit Einsätzen hoher Oberflächenhärte die Sägequalität und die Standzeit des Sägeblattes verbessert werden. Schneidstoffbestückte Sägeblätter als solche sind zwar aus anderen Bereichen der Sägetechnik bekannt. Der Einsatz solcher schneidstoffbestückter Sägeblätter für die Stahlzerspanung erfolgte jedoch bislang ausschließlich in einem Bereich sehr viel niedrigerer Drehzahlen, bei dem die Schnittgeschwindigkeit am Zahn im Bereich von 80-180 m/Min. liegt. Aufgrund der beim Friktionssägen erforderlichen extremen Umfangsgeschwindigkeiten wurde bislang nur ein Einsatz von Sägeblättern für möglich erachtet, die einstückig mit dem Stammkörper ausgebildete Zahnbereiche aufweisen. Überraschenderweise hat sich jedoch gezeigt, daß ein Einsatz von schneidstoffbestückten Sägeblättern beim Friktionssägen möglich ist, wenn ein erfindungsgemäß gestaltetes Sägeblatt Verwendung findet. Neben dem verbesserten Schneidverhalten weist die erfindungsgemäße Lösung vor allem eine deutlich herabgesetzte Schallabstrahlung auf. Im Gegensatz zu herkömmlichen Sägeblättern, bei denen infolge der Verstumpfung der Schneiden hohe Eigenschwingungen verursacht werden, entsteht durch die erfindungsgemäße Lösung ein gekoppeltes Schwingungssystem. Dieses besteht einerseits aus dem Stammkörper und andererseits aus den harten Einsätzen, wobei die Verbindung entweder über ein stoffschlüssiges Element, zum Beispiel ein Lot, oder über ein formschlüssiges Verbindungselement erfolgt. Das stoffschlüssige oder formschlüssige Verbindungselement wirkt als Dämpfungselement zwischen den beiden durch den Stammkörper einerseits und die Einsätze andererseits gebildeten Massen. Die hierdurch entstehende Dämpfungswirkung setzt die Schallabstrahlung deutlich herab. Darüber hinaus werden die bei herkömmlichen Sägeblättern bekannten Schmirgeleffekte bedingt durch seitliche Kaltaufschweissungen des zu sägenden Materials bei der Verwendung von Einsätzen gemäß der Erfindung vermieden. Ein weiterer Vorteil der erfindungsgemäßen Lösung ist darin zu sehen, daß die Schnittqualität aufgrund einer verringerten Gratbildung verbessert wird.

Gemäß einer bevorzugten Ausführungsform besteht der Stammkörper aus Stahl, insbesondere gehärtetem Chromvanadium- oder Manganstahl, mit einer Härte von mindestens 35-50 HRC.

Wenn die stoffschlüssige Verbindung des Einsatzes im Plattensitz aus einem Hartlot besteht, ergeben sich zum einem die oben beschriebenen vorteilhaften Dämpfungswirkungen. Zum anderen hat sich gezeigt, daß die Verwendung eines Hartlotes auch dann möglich ist, wenn die zu sägenden Werkstückkörper eine deutlich höhere Temperatur als 700° C haben, ohne daß die fliehkraftgesicherte Verbindung beeinflußt wird.

Bevorzugt ist vorgesehen, daß die Länge des Einsatzes etwa der Länge des Zahnrückens im Plattensitz entspricht. Durch die Verwendung von "kurzen Einsätzen" wird einerseits ermöglicht, daß auf dem Umfang des Sägeblattes möglichst viele solcher Einsätze untergebracht sein können, wie dies technologisch beim Friktionssägen erforderlich ist, und andererseits, daß jeder Einsatz nur wenig über den Außenumfang des Stammkörpers hervorsteht. Dies begünstigt nicht nur das Schallabstrahlungsverhalten sondern auch die Stabilität des einzelnen Zahnes gegen Brechen.

Eine weitere vorteilhafte Maßnahme kann darin bestehen, daß der Einsatz formschlüssig über eine Klemm- bzw. Steckverbindung mit dem Stammkörper verbunden ist.

Gemäß der Erfindung kann bei konstanter Zahnteilung der Schneidezähne der Plattensitzwinkel in Schneidrichtung sowohl durchgehend positiv als auch durchgehend negativ bzw. bei nicht-konstanter Zahnteilung abwechselnd positiv und negativ sein. Hierdurch ergeben sich Gestaltungsmöglichkeiten je nach zu bearbeitendem Material bzw. zu bearbeitendem Körper.

Weitere vorteilhafte Ausführungsformen gehen aus den nachfolgenden Unteransprüchen hervor.

Wenn die Breite des Einsatzes größer ist als die Dicke des Stammkörpers, ergibt sich ein seitlicher Überstand über dem Stammblatt, durch den ebenfalls ein Kaltaufschweißvorgang verhindert wird.

Eine besondere Ausführungsform der Erfindung sieht vor, daß die Schneideeinsätze in ihrem abtragsintensiven Bereich aus Diamant oder aus kubischem Bornitrid bestehen, die entweder an oder in einer Hartmetall-Trägerplatte befestigt sein können oder in eine Hartmetallmatrix eingebunden, insbesondere eingebettet sein können.

Die Erfindung wird im folgenden anhand einer Zeichnung näher erläutert dabei zeigen
- Figur 1: ein erstes Ausführungsbeispiel für ein erfindungsgemäß einzusetzendes Sägeblatt,
- Figur 2: ein zweites Ausführungsbeispiel und
- Figur 3: ein drittes Ausführungsbeispiel

Allgemein besteht das erfindungsgemäß gestaltete Kreissägeblatt in allen drei Ausführungsbeispielen aus einem Stammkörper 1, welcher aus gehärtetem CrV- oder Mn-Stahl besteht und eine Härte von mindestens 35-50 HRC aufweist.

Der Stammkörper ist kreisförmig und in seiner Mitte mit einer nicht dargestellten Zentralbohrung versehen. Weitere, ebenfalls nicht dargestellte Bohrungen im Stammkörper dienen der Befestigung des Sägeblattes auf dem Flansch der Sägeanlage bzw. für die Befestigung von Transportankerungen.

Im Randbereich des Stammkörpers sind Schneidzähne 2 ausgebildet, die sich entlang des gesamten Umfanges des gesamten Körpers erstrecken. An jedem Schneidzahn 2 ist ein Plattensitz 3 ausgebildet in Form einer ebenen Fläche, die unter einem vorgebbaren Plattensitzwinkel α orientiert ist. In jedem Plattensitz 3 ist eine in etwa plattenförmige Schneide 4 eingesetzt. Diese kann entweder aus Hartmetall, aus Kermamik, aus einer Keramik-Metall-Verbindung, aus kubischem Bornitrid oder aus Diamant bestehen. Die Höhe h eines Einsatzes ist so bemessen, daß er nur wenige Zehntel über die Zahnspitze 5 herausragt, wobei die Höhe maximal 10 mm. beträgt.

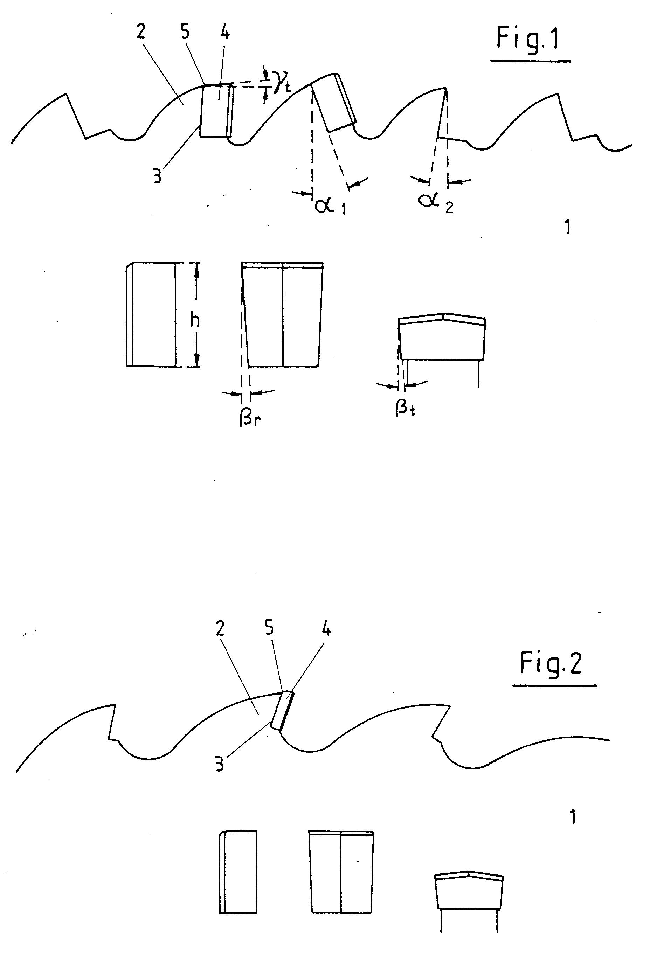

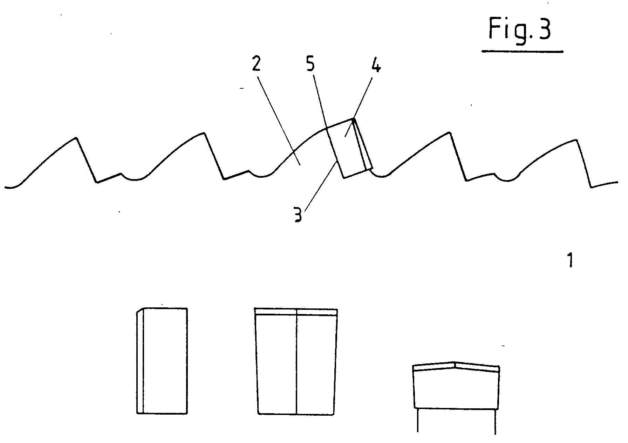

Der Plattensitzwinkel α, der durch den Schnittwinkel zwischen der verlängerten Ebene des Plattensitzes 3 und einer zu der Schneidrichtung senkrechten, durch die Spitze 5 des Schneidzahnes 2 gehenden Ebene definiert ist, ist gemäß Fig. 1 abwechselnd positiv (α₂) bzw. negativ (α₁). Gemäß Fig. 2 ist der Plattensitzwinkel stets positiv, während er gemäß Fig. 3 stets negativ ist.

Die Zahnteilung zwischen den einzelnen Schneidzähnen 2 ist dabei in den dargestellten Ausführungsbeispielen gemäß Figur 2 und 3 konstant, während sie in Figur 1 unterschiedlich ist.

Die Verbindung zwischen dem Schneidstoffeinsatz 4 und dem Stammkörper 1 im Bereich der Schneidzähne 2 erfolgt entweder durch Auflöten mittels eines hochtemperaturbeständigen Hartlotes oder durch eine Klemm- bzw. Steckverbindung.

Die Geometrien des Schneidstoffeinsatzes 4 sind in den unteren Bereichen der Figuren 1 bis 3 dargestellt. Jeder Einsatz weist im Schneidbereich einen Abkantungswinkel (γₜ) der Freifläche auf. Darüber hinaus sind radiale (βᵣ) und tangentiale (βₜ) Freiwinkel vorgesehen.

Die Schneidstoffeinsätze 4 weisen an den abtragsintensiven Bereichen, also dort wo der Kontakt mit dem Werkstück zuerst erfolgt, hinsichtlich der Härte weiter erhöhte Bereiche auf. Dies erfolgt dadurch, daß an diesen Stellen Diamant oder kubisches Bornitrid in die Hartmetalleinsätze eingebracht wird. Dies erfolgt entweder dadurch, daß diese extrem harten Stoffe auf einen als Trägerplatte ausgeführten Hartmetalleinsatz 4 aufgebracht sind oder in eine Matrix aus Hartmetall eingebunden sind. Die Herstellung kann nach einem pulvermetallurgischen Verfahren erfolgen, wobei das Diamant- oder kubische Bornitrid in die gewünschten abtragsintensiven Randzonen eingesintert bzw. an diesen Stellen aufgebracht wird.

## Patentansprüche

1. Verfahren zum Sägen von Stahlwerkstücken, bei dem das Werkstück mittels eines Sägeblattes einem Trennvorgang mit einer vorgebbaren Schnittgeschwindigkeit unterworfen wird, wobei das Sägeblatt Schneideinsätze mit einer Oberflächenhärte von mindestens 1200 HV 30 aufweist,
**dadurch gekennzeichnet,** daß zum Friktionssägen, insbesondere Warmsägen oder Trennsägen das Sägeblatt mit einer Schnittgeschwindigkeit von mindestens 7200 m/Min. angetrieben wird.

2. Sägeblatt Verwendung eines es zum Sägen von Werkstückkörpern aus Stahl in einem Verfahren nach Anspruch 1, bestehend aus einem Stammkörper mit in seinem Umfangsbereich ausgebildeten Schneidzahnbereichen, in denen Plattensitze für in Sägerichtung wirkende Schneideeinsätze vorgesehen sind, die fliehkraftgesichert mit dem Stammkörper verbunden sind, wobei die Schneideinsätze in ihrem abtragsaktiven Bereich eine Oberflächenhärte von mindestens 1200 HV 30 aufweisen.

3. Verwendung nach Anspruch 2,
**dadurch gekennzeichnet,** daß die Schneideinsätze in ihrem abtragsintensiven Bereich aus Diamant bestehen

4. Verwendung nach Anspruch 2,
**dadurch gekennzeichnet,** daß die Schneideinsätze in ihrem abtragsintensiven Bereich aus kubischem Bornitrid bestehen.

5. Verwendung nach Anspruch 2,
**dadurch gekennzeichnet,** daß die Schneideinsätze aus Hartmetall bestehen.

6. Verwendung nach Anspruch 2,
**dadurch gekennzeichnet,** daß die Schneideinsätze aus Keramik bestehen.

7. Verwendung nach Anspruch 3 oder 4,
**dadurch gekennzeichnet,** daß der Diamant oder das kubische Bornitrid an oder in einer Hartmetall-Trägerplatte befestigt sind.

8. Verwendung nach Anspruch 3 oder 4,
**dadurch gekennzeichnet,** daß der Diamant oder das kubische Bornitrid in eine Hartmetallmatrix eingebunden, insbesondere eingebettet sind.

9. Verwendung nach einem der vorhergehenden Ansprüche 2-8,
**dadurch gekennzeichnet,** daß der Stammkörper aus Stahl, insbesondere gehärtetem Chromvanadium- oder Manganstahl besteht und eine Härte von mehr als 35 HRC aufweist.

10. Verwendung nach einem der vorhergehenden Ansprüche 2-9,
**dadurch gekennzeichnet,** daß die fliehkraftgesicherte Verbindung des Einsatzes im Plattensitz durch eine Hartlotverbindung gebildet wird.

11. Verwendung nach einem der vorhergehenden Ansprüche 2-10,
**dadurch gekennzeichnet,** daß die Länge des Einsatzes in etwa der Länge des Zahnrückens im Plattensitz entspricht, jedoch maximal 10 mm. beträgt.

12. Verwendung nach einem der vorhergehenden Ansprüche 2-8,
**dadurch gekennzeichnet,** daß der Einsatz formschlüssig über eine Klemm- bzw. Steckverbindung mit dem Stammkörper verbunden ist.

13. Verwendung nach einem der vorhergehenden Ansprüche 2-12,
**dadurch gekennzeichnet,** daß die Zahnteilung der Schneidzähne konstant ist.

14. Verwendung nach einem der vorhergehenden Anprüche 2-13,
**dadurch gekennzeichnet,** daß der Plattensitzwinkel in Schneidrichtung positiv ist.

15. Verwendung nach einem der vorhergehenden Ansprüche 2-13,
**dadurch gekennzeichnet,** daß der Plattensitzwinkel in Schneidrichtung negativ ist.

16. Verwendung nach einem der vorhergehenden Ansprüche 2-13,
**dadurch gekennzeichnet,** daß der Plattensitzwinkel in Schneidrichtung abwechseln positiv bzw. negativ ist.

17. Verwendung nach einem der vorhergehenden Ansprüche 2-16,
**dadurch gekennzeichnet,** daß die Zahnteilung der Schneidzähne variabel mit Plattensitzwinkel in Schneidrichtung positiv oder negativ ist.

18. Verwendung nach einem der vorhergehenden Ansprüche 2-17,
**dadurch gekennzeichnet,** daß die Schneidzähne eine V-förmig gestaltete Spanfläche aufweisen.

19. Verwendung nach einem der vorhergehenden Ansprüche 2-18,
**dadurch gekennzeichnet,** daß die Spanfläche eine negative Fase aufweist.

20. Verwendung nach einem der vorhergehenden Ansprüche 2-19,
**dadurch gekennzeichnet,** daß die Schneidzähne eine tangentiale und eine radiale Freifläche aufweisen.

21. Verwendung nach einem der vorhergehenden Ansprüche 2-20,
**dadurch gekennzeichnet,** daß links und rechts im Freiflächenbereich eine Abkantung vorgsehen ist.

22. Verwendung nach einem der vorhergehenden Anprüche 2-21,
**dadurch gekennzeichnet,** daß die Breite des Einsatzes größer ist als die Dicke des Stammkörpers.

23. Verfahren nach Anspruch 1,
**dadurch gekennzeichnet,** daß das Werkstück auf eine Temperatur von mindestens 650°C aufgeheizt ist.

## Claims

1. A method for sawing steel workpieces in which the workpieces are subjected to a separation process using a saw blade with a predetermined cutting speed, in which the saw blade is designed with inserted-tooth cutting tips with a surface hardness of at least 1,200 HV 30, characterised in that the saw blade is driven with a cutting speed of at least 7,200 m/min, particularly for hot or separation sawing in the friction sawing process.

2. The application of a saw blade for sawing workpieces made of steel, for use in a method according to claim 1, comprising a main body with cutting teeth arranged along its circumference, into which foundation plates for the cutting tips are arranged in the cutting direction, and which are connected to the main body so as to minimise centrifugal force stress, in which the the cutting inserts have a surface hardness of at least 1,200 HV 30 in their high wear area.

3. An application according to claim 2, characterised in that the high wear area of the cutting tips are fitted with diamond.

4. An application according to claim 2, characterised in that the high wear area of the cutting tips are fitted with cubic boron nitride.

5. An application according to claim 2, characterised in that the cutting tips are made of carbide.

6. An application according to claim 2, characterised in that the cutting tips are made of ceramic.

7. An application according to claims 3 or 4, characterised in that the diamond or cubic boron nitride is fused either onto or into a carbide foundation plate.

8. An application according to claim 3 or 4, characterised in that the diamond or cubic boron nitride is combined or preferably embedded into a carbide matrix.

9. An application according to one of claims 2 to 8, characterised in that the main body is made of steel, preferably hardened chromium vanadium or manganese steel and has a hardness of more than 35 HRC.

10. An application according to one of claims 2 to 9, characterised in that the tip with the foundation plate is connected by a brazed connection to minimise centrifugal force stress.

11. An application according to one of claims 2 to 10, characterised in that the length of the tip is about the length of the tooth crest of the foundation plate, however with a maximum of 10 mm.

12. An application according to one of claims 2 to 8, characterised in that the tip is connected to the main body by a press fitting crimper or connector assembly.

13. An application according to one of claims 2 to 12, characterised in that the tooth distribution of the cutting blades is constant.

14. An application according to one of claims 2 to 13, characterised in that the foundation plate angle in cutting direction is positive.

15. An application according to one of claims 2 to 13, characterised in that the foundation plate angle in cutting direction is negative.

16. An application according to one of claims 2 to 13, characterised in that the foundation plate angle in cutting direction is alternately positive or negative.

17. An application according to one of claims 2 to 16, characterised in that the tooth distribution of the cutting teeth is variably positive or negative according to the foundation plate angle in cutting direction.

18. An application according to one of claims 2 to 17, characterised in that the cutting teeth have a V-shaped planing surface.

19. An application according to one of claims 2 to 18, characterised in that the planing surface has a negative chamfered edge.

20. An application according to one of claims 2 to 19, characterised in that the cutting blades have a tangential and/or a radial relief edge.

21. An application according to one of claims 2 to 20, characterised in that the relief edge is designed with a chamfer to the left and right.

22. An application according to one of claims 2 to 21, characterised in that the width of the insert is greater than the thickness of the main body.

23. A method according to claim 1, characterised in that the workpiece is heated to a temperature of at least 650 °C.

## Revendications

1. Procédé pour scier des pièces en acier, dans lequel la pièce est soumise, au moyen d'une lame de scie, à une opération de découpage exécutée avec une vitesse de coupe pouvant être prédéterminée, la lame de scie présentant des insertions de coupe ayant une dureté superficielle d'au moins 1200 HV 30, caractérisé en ce que, pour le sciage avec friction, en particulier le sciage à chaud ou le tronçonnage, la lame de scie est entraînée à une vitesse de coupe d'au moins 7200 m/min.

2. Utilisation, pour le sciage de corps de pièces en acier, dans un procédé selon la revendication 1, d'une lame de scie composée d'un corps de base muni de régions de dents de coupe formées dans sa région périphérique, dans lesquelles sont prévus des appuis de plaquettes pour des insertions de coupe agissant dans la direction du sciage, qui sont assemblées au corps de base avec une liaison à l'épreuve de la force centrifuge, les insertions de coupe présentant une dureté superficielle d'au moins 1200 HV 30 dans leur région qui est active pour l'enlèvement de matière.

3. Utilisation selon la revendication 2,
caractérisée en ce que les insertions de coupe sont composées de diamant dans leur région intensément active pour l'enlèvement de matière.

4. Utilisation selon la revendication 2,
caractérisée en ce que les insertions de coupe sont composées de nitrure de bore cubique dans leur région intensément active pour l'enlèvement de matière.

5. Utilisation selon la revendication 2,
caractérisée en ce que les insertions de coupe sont composées de métal dur.

6. Utilisation selon la revendication 2,
caractérisée en ce que les insertions de coupe sont composées de céramique.

7. Utilisation selon la revendication 3 ou 4,
caractérisée en ce que le diamant ou le nitrure de bore cubique est fixé sur ou dans une plaquette support en métal dur.

8. Utilisation selon la revendication 3 ou 4,
caractérisée en ce que le diamant ou le nitrure de bore cubique est incorporé, en particulier noyé, dans une matrice eu métal dur

9. Utilisation selon une des revendications précédentes 2 à 8,
caractérisée en ce que le corps de base est fait d'acier, en particulier d'acier au chrome vanadium ou au manganèse trempé et présente une dureté de plus de 35 HRC.

10. Utilisation selon une des revendications précédentes 2 à 9,
caractérisée en ce que l'assemblage à l'épreuve de la force centrifuge de l'insertion dans l'appui de plaquette est formé par un assemblage brasé dur.

11. Utilisation selon une des revendications précédentes 2 à 10,
caractérisée en ce que la longueur de l'insertion correspond à peu près à la longueur du dos de la dent dans l'appui de plaquette, mais est au maximum de 10 mm.

12. Utilisation selon une des revendications précédentes 2 à 8,
caractérisée eu ce que l'insertion est liée au corps de base par une liaison opérant par sûreté de forme, au moyen d'un assemblage à serrage ou à emmanchement.

13. Utilisation selon une des revendications précédentes 2 à 12,
caractérisée en ce que le pas de denture des dents de coupe est constant.

14. Utilisation selon une des revendications précédentes 2 à 13,
caractérisée en ce que l'angle de l'appui de plaquette dans la direction de la coupe est positif.

15. Utilisation selon une des revendications précédentes 2 à 13,
caractérisée en ce que l'angle de l'appui de plaquette dans la direction de la coupe est négatif.

16. Utilisation selon une des revendications précédentes 2 à 13,
caractérisée en ce que l'angle de l'appui de plaquette dans la direction de la coupe est alternativement positif et négatif.

17. Utilisation selon une des revendications précédentes 2 à 16,
caractérisée en ce que le pas de denture des dents de coupe est variable avec l'angle, positif ou négatif, de l'appui de plaquette dans la direction de la coupe.

18. Utilisation selon une des revendications précédentes 2 à 17,
caractérisée en ce que les dents de coupe présentent une surface d'enlèvement de copeaux en forme de V.

19. Utilisation selon une des revendications précédentes 2 à 18,
caractérisée en ce que la surface d'enlèvement de copeaux présente un biseau négatif.

20. Utilisation selon une des revendications précédentes 2 à 19,
caractérisée en ce que les dents de coupe présentent une surface en dépouille tangentielle et une surface en dépouille radiale,

21. Utilisation selon une des revendications précédentes 2 à 20,
caractérisée en ce qu'il est prévu un détalonnage à gauche et à droite dans la région des surfaces en dépouille.

22. Utilisation selon une des revendications précédentes 2 à 21,
caractérisée en ce que la largeur de l'insertion est plus grande que l'épaisseur du cops de base.

23. Procédé selon la revendication 1,
caractérisé en ce que la pièce est chauffée à une température d'au moins 650°C
